# EUROPÄISCHE PATENTSCHRIFT

(11) **EP 1 943 426 B1**
(45) Veröffentlichungstag und Bekanntmachung des Hinweises auf die Patenterteilung: **18.02.2009**
(21) Anmeldenummer: 06828827.3
(22) Anmeldetag: 18.10.2006
(51) Int. Cl.: F16B 5/06, B60N 3/02, B60R 13/02

(54) **VORRICHTUNG ZUM BEFESTIGEN EINES ANBAUTEILES AN EINEM TRÄGERTEIL**
DEVICE FOR FASTENING AN ATTACHMENT TO A SUPPORT PART
DISPOSITIF DE FIXATION D'UN COMPOSANT SUR UNE PIECE DE SUPPORT

(30) Priorität: 28.10.2005 DE 102005051678
(43) Veröffentlichungstag der Anmeldung: 16.07.2008
(73) Patentinhaber: A. RAYMOND ET CIE, 38019 Grenoble Cedex 1 (FR)
(72) Erfinder: SPITZ, Uwe, 79618 Rheinfelden (DE)
(74) Vertreter: Rüttgers, Joachim
(86) Internationale Anmeldenummer: PCT/EP2006/010025
(87) Internationale Veröffentlichungsnummer: WO 2007/048530

(56) Entgegenhaltungen:
- EP-A1- 0 743 461
- EP-A2- 0 967 136
- DE-A1- 4 309 024

## Beschreibung

Die Erfindung betrifft eine Vorrichtung gemäß dem Oberbegriff des Patentanspruches 1.

Eine derartige Vorrichtung ist aus EP 0 743 461 A1 bekannt. Die vorbekannte Vorrichtung zum Befestigen eines Anbauteiles an einem Trägerteil weist eine Klammer auf, die über eine Basisplatte und zwei an einander gegenüberliegenden Seiten der Basisplatte angeordnete Schenkelanordnungen verfügt. Jede Schenkelanordnung weist einen an die Basisplatte angesetzten Innenschenkel und einen Außenschenkel auf, wobei jeder Außenschenkel über einen umgebogenen Biegeabschnitt mit dem ihm zugeordneten Innenschenkel verbunden ist und sich mit einem dem Biegeabschnitt gegenüberliegenden freien Ende bis in den Bereich der Basisplatte erstreckt. Weiterhin ist eine Eingriffseinheit vorhanden, die mit der Klammer und dem Anbauteil in Eingriff bringbar ist. Die Eingriffseinheit weist ein mit dem Anbauteil verbindbares Lagerstück und ein in dem Lagerstück verschiebbar gelagertes Sperrteil auf, wobei das Sperrteil in einer Freigabestellung wirkungseingriffsfrei zu der Klammer angeordnet sowie in einer Sperrstellung mit den Sperrfüßen derart mit der Klammer in Eingriff ist, dass jeweils wenigstens ein Sperrfuß eine Bewegung der Außenschenkel in Richtung der mit dem jeweiligen Außenschenkel verbundenen Innenschenkel blockiert. Bei dieser Vorrichtung ist das Lagerstück als ein massiver Block ausgebildet, der in der Sperrstellung den Raum zwischen den Innenschenkeln vollständig ausfüllend in dem Lagerstück angeordnet ist.

Aus DE 43 09 024 A1 ist ein Befestigungselement für an Karosserieteilen von Kraftfahrzeugen zu befestigende Ausstattungsteile wie Armlehnen, Haltegriffe, Sonnenblenden, Rückspiegel und dergleichen bekannt, bei der eine Sicherungsanordnung einen drehbaren Klappdeckel aufweist, an dem eine Sicherungszunge angeformt.ist, die in der geschlossenen Stellung des Klappdeckels ein Sperrteil in einer Sperrstellung hält.

Aus DE 35 24 651 A1 ist eine Vorrichtung zum Befestigen eines Anbauteiles an einem Trägerteil bekannt, die über eine in einer Ausnehmung in dem Trägerteil zu positionierende Klammer verfügt, die mit einer Basisplatte und zwei an einander gegenüberliegenden Seiten der Basisplatte angeordneten Schenkelanordnungen ausgebildet ist. Jede Schenkelanordnung weist einen an die Basisplatte angesetzten Innenschenkel und einen Außenschenkel auf, wobei der Außenschenkel über einen umgebogenen Abschnitt mit dem Innenschenkel verbunden ist und sich mit einem dem umgebogenen Abschnitt gegenüberliegenden freien Ende bis in den Bereich der Basisplatte erstreckt. Weiterhin ist eine Eingriffseinheit in Gestalt einer Schraube vorhanden, die mit der Klammer und dem Anbauteil in Eingriff bringbar ist. Dabei greift die Schraube durch eine Ausnehmung in dem Anbauteil durch und kommt mit einem in der Basisplatte ausgebildeten Gewindebereich in Eingriff, während sich umgebogene Abschnitte der freien Enden der Außenschenkel an der dem Anbauteil gegenüberliegenden Rückseite des Trägerteiles abstützen. Bei Anziehen der Schraube spreizen sich in der Regel bei korrektor Anordnung der Basisplatte sowie der Außenschenkel die Außenschenkel nach außen ab und erhöhen dadurch die Auszugfestigkeit der gattungsgemäßen Vorrichtung. Allerdings besteht die Gefahr, dass bei nicht ordnungsgemäßer Anordnung der Klammer die Außenschenkel in die Ausnehmung des Trägerteiles eintreten und die vorgesehene Auszugsfestigkeit nicht erreicht wird. Entsprechende Probleme gibt es beim Verkippen der Klammer.

Der Erfindung liegt die Aufgabe zugrunde, eine Vorrichtung der eingangs genannten Art anzugeben, die sich bei einer kompakten, wenig raumgreifenden Bauform des Sperrteiles durch eine hohe Auszugsfestigkeit auszeichnet.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgmäßen Vorrichtung die Bewegung der Außenschenkel durch die Wirkung wenigstens eines jeweils einer Schenkelanordnung zugeordneten Sperrfußes des Sperrteiles blockiert ist, lässt sich bei einer wenig raumgreifenden Bauform des Sperrteiles die Bewegung der Außenschenkel in Richtung der ihnen zugeordneten Innenschenkel blockieren.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Explosionsansicht ein Ausfüh- rungsbeispiel einer erfindungsgemäßen Vorrichtung mit ei- ner Klammer, einem Lagerstück und einem Sperrteil,
- Fig. 2: im Schnitt das Ausführungsbeispiel gemäß Fig. 1 mit einem Klappdeckel des Lagerstückes in geöffneter Stellung und
- Fig. 3: im Schnitt das Ausführungsbeispiel gemäß Fig. 1 mit dem Klappdeckel in geschlossener Stellung.

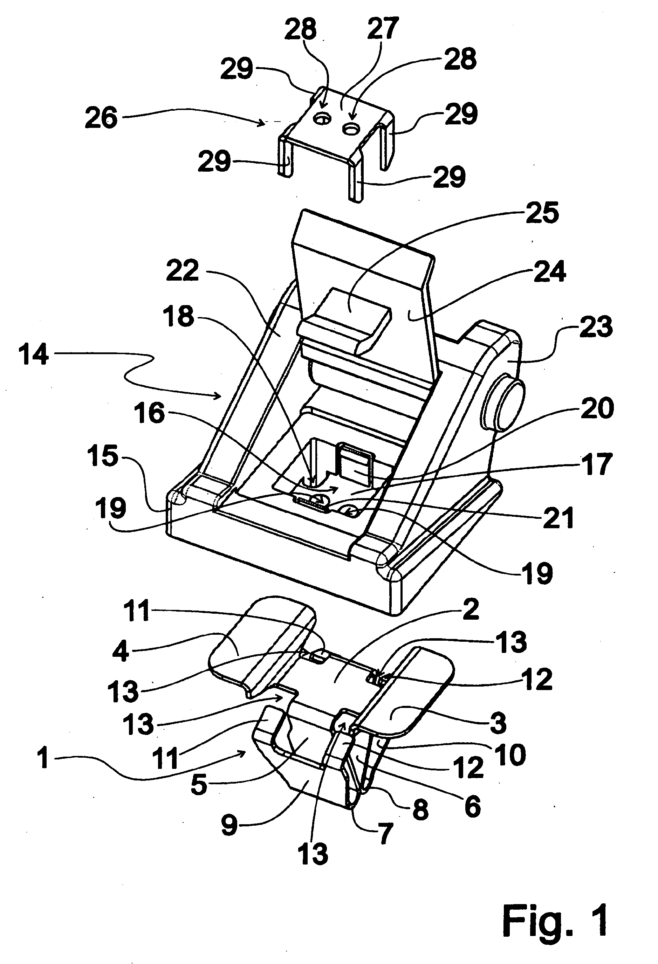

Fig. 1 zeigt in einer perspektivischen Ansicht ein Ausführungsbeispiel einer erfindungsgemäßen Vorrichtung, die insbesondere zum Befestigen eines Dachhaltegriffes bei einem Kraftfahrzeug dient. Das Ausführungsbeispiel gemäß Fig. 1 verfügt über eine Klammer 1 aus Metall, die mit einer Basisplatte 2 und zwei an die Basisplatte 2 angeformten flügelartigen Randabschnitten 3, 4 ausgebildet ist. Weiterhin sind an die Basisplatte 2 an den zwischen den Randabschnitten 3, 4 liegenden Seiten jeweils ein Innenschenkel 5, 6 angeformt, die sich in einer von der Basisplatte 2 wegweisenden Richtung aufeinander zu erstrecken. An den der Basisplatte 2 gegenüberliegenden Enden der Innenschenkel 5, 6 sind in etwa halbkreisförmig umgebogene Biegeabschnitte 7, 8 vorhanden, an die sich in Richtung der Basisplatte 2 erstreckende Außenschenkel 9, 10 ansetzen.

Die Außenschenkel 9, 10 sind in etwa parallel zu den Innenschenkeln 5, 6 angeordnet und weisen an ihren der Basisplatte 2 zugewandten freien Enden jeweils zwei randseitig angeordnete Schenkelfinger 11, 12 auf, die in etwa rechtwinklig zu dem jeweiligen Außenschenkel 9, 10 angeordnet sind und sich in Richtung des ihnen direkt gegenüberliegenden Innenschenkels 5, 6 erstrecken. Die Schenkelfinger 11, 12 eines Außenschenkels 9, 10 weisen voneinander einen Abstand auf, der wenigstens so groß wie die Breite des angeordneten Innenschenkels 5, 6 im Ansatzbereich an der Basisplatte 2 ist. Zwischen den den Außenschenkel 9, 10 abgewandten freien Enden der Schenkelfinger 11, 12 und der Basisplatte 2 sind Freiräume 13 ausgebildet.

Weiterhin verfügt das Ausführungsbeispiel gemäß Fig. 1 über ein Lagerstück 14 aus einem Kunststoffmaterial, in das bei bestimmungsgemäßer Anordnung die Randabschnitte 3, 4 der Klammer 1 beispielsweise durch Umspritzen eingebettet sind. Das Lagerstück 14 weist bei diesem Ausführungsbeispiel eine in etwa im Schnitt quadratische Sockelplatte 15 auf, in die mittig ein Aufnahmeraum 16 eingeformt ist. Der Aufnahmeraum 16 ist an seiner der Klammer 1 zugewandten Seite mit einer Bodenplatte 17 abgeschlossen, wobei die Bodenplatte 17 in ihren Eckbereichen Fußausnehmungen 18 aufweist, die einen Durchgang zu der Klammer 1 schaffen. Weiterhin sind im Mittenbereich der Bodenplatte 17 rundliche Durchstecklöcher 19 ausgebildet.

An einander gegenüberliegenden Seiten des Aufnahmeraumes sind federnde, mit endseitigen Nasen ausgebildete Rückhaltezungen 20, 21 vorhanden, die sich von der Bodenplatte 17 weg bis zum der Bodenplatte 17 gegenüberliegenden Rand des Aufnahmeraumes 16 erstrecken.

An Randseiten der Sockelplatte 15 sind Seitenplatten 22, 23 angeformt, die in etwa dreieckförmig ausgebildet sind und an deren erhabener Seite ein schwenkbarer Klappdeckel 24 eingepasst ist. Der Klappdeckel 24 verfügt über eine etwa mittig angeordnete, in einem Endbereich abgewinkelte Sicherungszunge 25, die bei Überführen des Klappdeckels 24 von einer in Fig. 1 dargestellten geöffneten Stellung in eine der Außenkontur der Seitenplatten 22, 23 folgende geschlossene Stellung in den Aufnahmeraum 16 eintaucht.

Schließlich ist Fig. 1 zu entnehmen, dass das dargestellte Ausführungsbeispiel der erfindungsgemäßen Vorrichtung über ein im Wesentlichen quadratisches Sperrteil 26 aus Metall verfügt, das mit einer Grundplatte 27 ausgebildet ist, in deren Mittenbereich als Werkzeugansatzmittel in einem dem Abstand der Durchstecklöcher 19 entsprechend angeordnete Greiflöcher 28 ausgebildet sind. In den Eckbereichen der Grundplatte 27 sind sich rechtwinklig zu der Grundplatte 27 in einer Richtung von der Grundplatte 27 weg erstreckende Sperrfüße 29 ausgebildet, die in einem den Abständen der Fußausnehmungen 18 voneinander entsprechende Anordnung vorliegen. Die Dimensionen der Grundplatte 27 sind so eingerichtet, dass bei Einfügen des Sperrteiles 26 in den Aufnahmeraum 16 die endseitig angeordneten Nasen der Rückhaltezunge 20 die Grundplatte 27 hintergreifen.

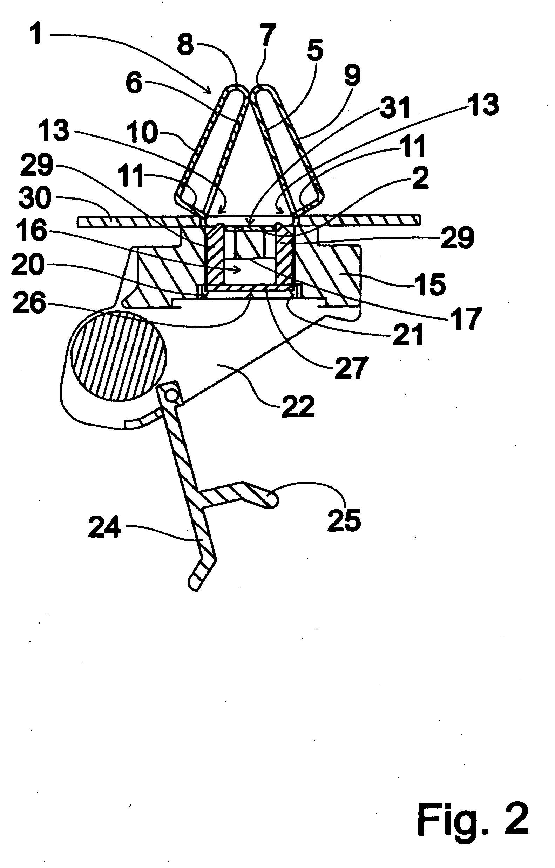

Fig. 2 zeigt im Schnitt das Ausführungsbeispiel gemäß Fig. 1 mit dem Klappdeckel 24 in einer geöffneten Stellung und dem Sperrteil 26 in einer in den Aufnahmeraum 16 eingefügten Anordnung in einer Freigabestellung, in der die im Übrigen angeschrägten Endseiten aufweisenden Sperrfüße 29 allenfalls unwesentlich über die der Klammer 1 zugewandten Seite der Sockelplatte 15 überstehen. In dieser Anordnung ist die erfindungsgemäße Vorrichtung in eine in einem Anbauteil 30 eingebrachte Anbauausnehmung 31 mit an die Klammer 1 angepassten Dimensionen einfügbar, wobei während des Einfügevorganges die Außenschenkel 9, 10 einfedern und sich nach Abschluss des Einfügevorganges in der in Fig. 2 dargestellten relaxierten Stellung befinden. In dieser Anordnung ist das Sperrteil 26 durch den Hintergriff der an den Rückhaltezungen 20, 21 ausgebildeten Nasen verliersicher gehalten.

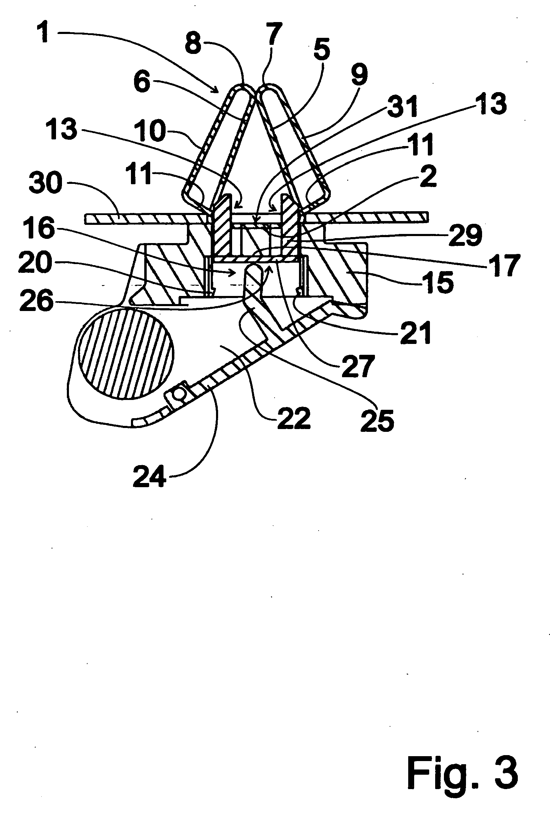

Fig. 3 zeigt im Schnitt das Ausführungsbeispiel gemäß Fig. 1 mit einem bis zum Anschlag an die Bodenplatte 17 in den Aufnahmeraum 16 eingeschobenen Sperrteil 26 und dem Klappdeckel 24 in einer vollständig geschlossenen Stellung, in der das freie Ende der entsprechend dimensionierten Sicherungszunge 25 nahe der Grundplatte 27 des Sperrteiles 26 angeordnet ist. Aus Fig. 3 ist ersichtlich, dass in dieser Sperrstellung der Sperrteile 26 die Sperrfüße 29 nunmehr in die Freiräume 13 eingetreten sind und mit ihren Außenseiten an den freien Enden der Schenkelfinger 11, 12 anliegen. Vorzugsweise drücken die Sperrfüße 29 die Außenschenkel 9, 10 etwas nach außen von dem jeweiligen Innenschenkel 5, 6 weg. Dadurch ist eine Bewegung der Außenschenkel 9, 10 in Richtung der Innenschenkel 5, 6 blockiert, so dass eine hohe Auszugsfestigkeit insbesondere auch bei Einwirken von Kippmomenten auf das Lagerstück 14 sichergestellt ist.

Zum Entfernen der erfindungsgemäßen Vorrichtung gemäß dem erläuterten Ausführungsbeispiel werden nach Öffnen des Klappdeckels 24 in die mit den Greiflöchem 28 fluchtenden, aber größer dimensionierten Durchstecklöcher 19 beispielsweise die Enden einer Rundzange eingeführt. Nach entsprechender Manipulation der Rundzange wird das Sperrteil 26 aus dem Eingriff der Sperrfüße 29 in die Freiräume 13 herausgezogen, so dass die Vorrichtung wieder von dem Anbauteil 30 entfernt werden kann. Somit ist der Befestigungs- und Lösevorgang im Wesentlichen beliebig oft wiederholbar.

## Patentansprüche

1. Vorrichtung zum Befestigen eines Anbauteiles an einem Trägerteil (30) mit einer Klammer (1), die über eine Basisplatte (2) und zwei an einander gegenüberliegenden Seiten der Basisplatte (2) angeordnete Schenkelanordnungen verfügt, wobei jede Schenkelanordnung einen an die Basisplatte (2) angesetzten Innenschenkel (5, 6) und einen Außenschenkel (9, 19) aufweiset, wobei jeder Außenschenkel (9, 10) über einen umgebogenen Biegeabschnitt (7, 8) mit dem ihm zugeordneten Innenschenkel (5, 6) verbunden ist und sich mit einem dem Biegeabschnitt (7, 8) gegenüberliegenden freien Ende bis in den Bereich der Basisplatte (2) erstreckt, und mit einer Eingriffseinheit, die mit der Klammer (1) und dem Anbauteil (14) in Eingriff bringbar ist, wobei die Eingriffseinheit über ein mit dem Anbauteil (30) verbindbares Lagerstück (14) und ein in dem Lagerstück (14) verschiebbar gelagertes Sperrteil (26) verfügt, wobei das Sperrteil (26) in einer Freigabestellung wirkeingriffsfrei zu der Klammer (1) angeordnet sowie in einer Sperrstellung mit den Sperrfüßen (29) derart mit der Klammer (1) in Eingriff ist, dass jeweils wenigstens ein Sperrfuß (29) eine Bewegung der Außenschenkel (9, 10) in Richtung des mit dem jeweiligen Außenschenkel (9, 10) verbundenen Innenschenkels (5, 6) blockiert, **dadurch gekennzeichnet, dass** das Sperrteil (26) wenigstens zwei Sperrfüße (29) aufweist, dass in der Sperrstellung jeder Sperrfuß (29) in einen zwischen einem dem Außenschenkel (9, 10) abgewandten freien Enden des Schenkelfingers (11, 12) und der Basisplatte (2) ausgebildeten Freiraum (13) eingetreten ist sowie mit seiner Außenseite an dem freien Enden des Schenkelfingers (11, 12) anliegt und dass jeder Außenschenkel (9, 10) an seinem freien Ende wenigstens einen in Richtung des mit ihm verbundenen Innenschenkels (5, 6) umgebogenen Schenkelfinger (11, 12) aufweist, der in der Sperrstellung des Sperrteiles (26) an einem Sperrfuß (29) anliegt.

2. Vorrichtung nach Anspruch 1, **dadurch gekennzeichnet, dass** das Sperrteil (26) in der Sperrstellung so auf die Außenschenkel (9, 10) einwirkt, dass die freien Enden der Außenschenkel (9, 10) gegenüber ihrer Anordnung in der Freigabestellung des Sperrteiles (26) nach außen gedrückt sind.

3. Vorrichtung nach Anspruch 1 oder Anspruch 2, **dadurch gekennzeichnet, dass** das Lagerstück (14) einen Aufnahmeraum (16) aufweist und mit Rückhalteelementen (20, 21) ausgestattet ist, die das Sperrteil (26) verliersicher in dem Aufnahmeraum (16) halten.

4. Vorrichtung nach einem der Ansprüche 1 bis 3, **dadurch gekennzeichnet, dass** die Eingriffseinheit eine Sicherungsanordnung (24, 25) aufweist, die das Sperrteil (26) in der Sperrstellung gegen unbeabsichtigtes Verschieben in die Freigabestellung sichert.

5. Vorrichtung nach Anspruch 4, **dadurch gekennzeichnet, dass** die Sicherungsanordnung einen drehbaren Klappdeckel (24) aufweist, an dem eine Sicherungszunge (25) angeformt ist, die in der geschlossenen Stellung des Klappdeckels (24) das Sperrteil (26) in der Sperrstellung hält.

6. Vorrichtung nach einem der Ansprüche 1 bis 5, **dadurch gekennzeichnet, dass** das Sperrteil (26) Werkzeugansatzmittel (28) aufweist, die zum Bewegen des Sperrteiles (26) von der Sperrstellung in die Freigabestellung mit einem Werkzeug in Eingriff bringbar sind.

## Claims

1. Device for fastening an add-on part to a support part (30) with a clip (1) which has a baseplate (2) and two limb arrangements arranged on opposite sides of the baseplate (2), each limb arrangement having an inner limb (5, 6) mounted on the baseplate (2) and an outer limb (9, 10), each outer limb (9, 10) being connected via a bent-over section (7, 8) to the inner limb (5, 6) coordinated with it and extending with a free end opposite the bent-over section (7, 8) to the region of the baseplate (2), and with an engaging unit which can be made to engage the clip (1) and the add-on part (14), the engaging unit having a bearing piece (14) connectable to the add-on part (30) and a blocking part (26) displaceably mounted in the bearing piece (14), the blocking part (26), in a release position, being arranged without active engagement with the clip (1) and, in a blocking position, engaging the clip (1) with the blocking feet (29) in such a way that in each case at least one blocking foot (29) blocks a movement of the outer limbs (9, 10) in the direction of the inner limb (5, 6) connected to the respective outer limb (9, 10), **characterized in that** the blocking part (26) has at least two blocking feet (29), **in that**, in the blocking position, each blocking foot (29) has entered a space (13) formed between a free end of the limb finger (11, 12), which end faces away from the outer limb (9, 10), and the baseplate (2), and rests with its outer side on the free end of the limb finger (11, 12), and **in that** each outer limb (9, 10) has, at its free end, at least one limb finger (11, 12) bent over in the direction of the inner limb (5, 6) connected to it, which limb finger rests against a blocking foot (29) in the blocking position of the blocking part (26).

2. Device according to Claim 1, **characterized in that**, in the blocking position, the blocking part (26) acts on the outer limbs (9, 10) so that the free ends of the outer limbs (9, 10) are pressed outwards relative to their arrangement in the release position of the blocking part (26).

3. Device according to Claim 1 or Claim 2, **characterized in that** the bearing piece (14) has a receptacle (16) and is equipped with retaining elements (20, 21) which hold the blocking part (26) in a captive manner in the receptacle (16).

4. Device according to any of Claims 1 to 3, **characterized in that** the engaging unit has a securing arrangement (24, 25) which secures the blocking part (26) in the blocking position to prevent unintentional displacement to the release position.

5. Device according to Claim 4, **characterized in that** the securing arrangement has a pivotable hinged cover (24) on which a securing tongue (25) is formed which, in the closed position of the hinged cover (24), holds the blocking part (26) in the blocking position.

6. Device according to any of Claims 1 to 5, **characterized in that** the blocking part (26) has tool attachment means (28) which can be made to engage a tool for moving the blocking part (26) from the blocking position to the release position.

## Revendications

1. Dispositif de fixation d'un élément rapporté sur un élément faisant office de support (30) au moyen d'une agrafe (1), qui se compose d'une plaque de base (2) et de deux agencements formant segments disposés attenants à deux côtés de la plaque de base (2) se faisant respectivement face, dans laquelle chaque agencement formant segment comprend un segment intérieur (5, 6) et un segment extérieur (9, 10) attenants à la plaque de base (2), dans laquelle chaque segment extérieur (9, 10) est raccordé au segment intérieur (5, 6) qui lui correspond par l'intermédiaire d'une portion cintrée repliée sur elle-même (7, 8) et dont l'extrémité libre opposée à la portion cintrée (7, 8) s'étend jusque dans la zone correspondant à la plaque de base (2), et au moyen d'un élément d'accrochage qui est destiné à être engagé en prise d'encastrement avec l'agrafe (1) et l'élément rapporté (30), l'élément d'accrochage comportant en l'occurrence un élément formant portée d'appui (14) destiné à être raccordé à l'élément rapporté (30) et un organe de blocage (26) monté coulissant dans l'élément formant portée d'appui (14), l'organe de blocage (26) étant en l'occurrence disposé, dans sa position de dégagement, sans exercer d'emprise d'accrochage vis-à-vis l'agrafe (1) et, dans sa position de blocage, en prise d'accrochage au niveau de ses pattes de blocage (29) avec l'agrafe (1), dans des conditions telles que respectivement au moins une patte de blocage (29) empêche le segment extérieur (9, 10) de se déplacer dans la direction du segment intérieur (5, 6) relié au segment extérieur (9, 10) respectif, **caractérisé en ce que** l'organe de blocage (26) comporte au moins deux pattes de blocage (29), qu'en position de blocage chaque patte de blocage (29) s'est insérée dans un espace libre (13) défini entre les extrémités libres, orientées à l'opposé du segment extérieur (9, 10), du doigt de segment (11, 12) et la plaque de base (2) et qu'elle est, au niveau de sa face extérieure, en contact d'appui contre les extrémités libres du doigt de segment (11, 12), et que chaque segment extérieur (9, 10) comporte, au niveau de son extrémité libre, au moins un doit de segment (11, 12) replié dans la direction du segment intérieur (5, 6) auquel il est raccordé qui, dans la position de blocage de l'organe de blocage (26) est en contact d'appui contre une patte de blocage (29).

2. Dispositif selon la revendication 1, **caractérisé en ce que** l'organe de blocage (26) exerce, dans sa position de blocage, sur le segment extérieur (9, 10) une action telle que les extrémités libres des segments extérieurs (9, 10) sont, contrairement à leur disposition dans la position de dégagement de l'organe de blocage (26), comprimés vers l'extérieur.

3. Dispositif selon la revendication 1 ou la revendication 2, **caractérisé en ce que** l'élément formant portée d'appui (14) comporte un gabarit d'insertion (16) et qu'il est muni d'organes de retenue (20, 21) qui maintiennent de manière imperdable l'organe de blocage dans le gabarit d'insertion (16).

4. Dispositif selon l'une des revendications 1 à 3, **caractérisé en ce que** l'élément d'accrochage est muni d'un agencement d'immobilisation en position (24, 25) qui empêche l'organe de blocage (26) de passer de manière intempestive de sa position de blocage à sa position de dégagement.

5. Dispositif selon la revendication 4, **caractérisé en ce que** l'agencement d'immobilisation en position comprend un couvercle rabattable pivotant (24), muni d'une languette de verrouillage (25) réalisée solidaire de celui-ci par moulage, qui, dans la position du couvercle rabattable (24) maintient l'organe de blocage (26) dans sa position de blocage.

6. Dispositif selon l'une des revendications 1 à 5, **caractérisé en ce que** l'organe de blocage (26) est muni de moyens d'insertion d'un outil (28) qui sont destinés à être amenés en prise d'engagement avec un outil pour amener l'organe de blocage (26) de sa position de blocage dans sa position de dégagement.
